(19) Europäisches Patentamt / European Patent Office / Office européen des brevets

(11) **EP 2 246 973 B1**

(12) **FASCICULE DE BREVET EUROPEEN**

(45) Date de publication et mention
de la délivrance du brevet:
**30.05.2018 Bulletin 2018/22**

(51) Int Cl.:
***H02P 21/32*** *(2016.01)*       ***H02P 21/18*** *(2016.01)*
***H02P 21/04*** *(2006.01)*       ***H02P 21/00*** *(2016.01)*
***H02P 21/14*** *(2016.01)*

(21) Numéro de dépôt: **10159258.2**

(22) Date de dépôt: **07.04.2010**

(54) **Procédé de détermination de la position du vecteur de flux d'un moteur**

Verfahren zur Positionsbestimmung des Flussvektors eines Motors

Method for determining the position of the flux vector of a motor

(84) Etats contractants désignés:
**AT BE BG CH CY CZ DE DK EE ES FI FR GB GR
HR HU IE IS IT LI LT LU LV MC MK MT NL NO PL
PT RO SE SI SK SM TR**

(30) Priorité: **21.04.2009 FR 0952584**

(43) Date de publication de la demande:
**03.11.2010 Bulletin 2010/44**

(73) Titulaire: **Schneider Toshiba Inverter Europe SAS
27120 Pacy sur Eure (FR)**

(72) Inventeurs:
• **Basic, Duro
27120 Pacy sur Eure (FR)**
• **Malrait, François
27120 Jouy sur Eure (FR)**
• **Rouchon, Pierre
92190 Meudon (FR)**

(74) Mandataire: **Dufresne, Thierry
Schneider Electric Industries SAS
Service Propriété Industrielle
35 rue Joseph Monier - CS 30323
92506 Rueil-Malmaison Cedex (FR)**

(56) Documents cités:
**EP-A- 1 944 860          US-A1- 2003 006 723
US-A1- 2003 062 870      US-A1- 2006 119 305**

**Description**

La présente invention se rapporte à un procédé de détermination de la position d'un vecteur de flux d'un moteur électrique, lequel est piloté par un variateur de vitesse et est destiné à entraîner une charge. Le procédé est réalisé sans capteur de vitesse ou de position (sensorless), et est basé sur la détection d'une erreur de la position estimée du vecteur de flux en utilisant une injection de courant à basse fréquence.

Pour obtenir une commande efficace du couple d'un moteur électrique à courant alternatif piloté par un variateur de vitesse, le système de commande du variateur requiert une information relative à la position du vecteur de flux du moteur (habituellement du rotor). Cette position du vecteur de flux du rotor peut être estimée de façon satisfaisante en boucle fermée à l'aide d'un capteur de position ou de vitesse du rotor, tel qu'un codeur. Néanmoins, un tel capteur est relativement coûteux et est mécaniquement et électriquement sensible, ce qui peut entraîner notamment des difficultés de mise au point.

En l'absence de capteur de vitesse ou de position, c'est-à-dire en boucle ouverte, la position du vecteur de flux est estimée à partir d'une modélisation du moteur et de la tension du stator du moteur. Cette approche est efficace quand la fréquence principale de la tension du stator, qui est l'image de la référence vitesse appliquée au moteur, est suffisamment élevée pour que la force électromotrice interne (emf) induite par le flux puisse être détectée de façon fiable. C'est généralement le cas quand la fréquence principale de la tension stator est supérieure à environ 5-10% de la fréquence nominale du stator, c'est-à-dire quand la vitesse appliquée au moteur est supérieure à environ 5-10% de la vitesse nominale.

Cependant, il est connu que les techniques de commande sans capteur de position basées sur un signal à la fréquence principale sont peu performantes à basse vitesse car la force électromotrice induite devient alors faible et peut totalement disparaître à fréquence nulle. Le problème fondamental est que, quand la force électromotrice induite dépendant de la vitesse devient basse, son évaluation à partir de la tension du stator devient imprécise à cause d'erreurs dans les paramètres du modèle du moteur (comme la résistance du stator). Le résultat est que des écarts angulaires importants sont faits dans l'évaluation de la position de flux à basse vitesse et à charge lourde, ce qui amène à de mauvaises performances de la commande du moteur.

Dans d'autres situations, telles que l'entraînement d'un moteur synchrone à aimant permanent (Permanent Magnet Synchronous Motor - PMSM), même si un capteur de position est utilisé, la position absolue du vecteur de flux rotor doit être déterminée avant le démarrage du moteur. Il faut donc également une méthode permettant la détection de la position du flux de l'aimant rotor à vitesse nulle.

Pour fournir une détection fiable de la position du vecteur de flux rotor à basse vitesse sans utilisation de capteur, diverses méthodes basées sur l'injection d'un signal auxiliaire peuvent être employées. Habituellement, l'injection d'une tension ou d'un courant dans les enroulements du stator à une fréquence différente de la fréquence principale est utilisée afin de déterminer l'information de position du vecteur de flux rotor en observant et en analysant la réponse en courant ou en tension du stator. Une méthode est appelée injection de courant harmonique à basse fréquence. Le but de cette méthode est de générer de petites oscillations de couple et de vitesse rotor capables d'induire des oscillations détectables de tension. Le terme basse fréquence dans ce contexte signifie que la fréquence d'injection (ou fréquence harmonique) est comprise dans la largeur de bande mécanique du système mécanique d'entraînement. Par exemple, pour des moteurs de fréquence nominale égale à environ 50Hz-60Hz, la fréquence typique d'injection serait de l'ordre de 25Hz-50Hz.

La méthode d'injection de courant à basse fréquence est déjà employée pour la commande de moteur à induction, voir notamment : V.-M. Leppanen, J. Luomi, 'Speed-Sensorless Induction Machine Control for Zero Speed and Frequency', IEEE Transactions on Industrial Electronics, Vol. 51, No. 5, Oct. 2004, pp. 1041-1047. Cette méthode est aussi employée pour la commande de moteur synchrone PMSM, voir notamment : S. Wu, Y. Li, X. Miao, 'Comparison of Signal Injection Methods for Sensorless control of PMSM at Very Low Speeds', IEEE Power Electronics Specialists Conference, PESC 2007, June 2007 pp. 568 - 573.

Cette méthode permet de déterminer les composantes de la tension du stator qui sont induites par le flux du rotor suite à l'injection commandée de courant, de façon à détecter ensuite la position du vecteur de flux rotor. Pour cela, une approche est d'utiliser un régulateur PI habituel (Proportionnel Intégral) qui soit synchrone avec le repère de référence (SRF - Synchronous Reference Frame) du courant principal moteur, noté également repère (d,q), et qui possède une largeur de bande suffisante (c'est-à-dire capable de réguler également le courant injecté), puis d'utiliser une équation de la tension stator pour déterminer la force électromotrice interne induite.

Cependant une telle méthode exige une connaissance de plusieurs paramètres du moteur (tels que nombre de pôles, inertie moteur) et un traitement additionnel de démodulation pour déterminer le signal d'erreur de position du vecteur de flux rotor. Cela rend l'algorithme global complexe et dépendant de ces paramètres. De plus, la commande des courants d'injection n'est pas précise et une erreur stationnaire (steady state error) peut apparaître dans la régulation de ces courants d'injection. Le document EP1944860 décrit un procédé pour estimer sans capteur la vitesse et la position d'une machine synchrone à aimant permanent. Un signal haute fréquence est injecté comprenant une composante directe et une composante en quadrature. La composante directe a une première fréquence et la composante en quadrature a une deuxième fréquence, la première et deuxième fréquence étant différentes. L'invention a donc pour but de remédier à ces difficultés en proposant un procédé pour déterminer la position du vecteur de flux rotor qui soit simple, précis et fiable, en particulier lorsque le moteur tourne à vitesse réduite et même à vitesse nulle. Le procédé n'utilise pas de capteur de position et s'applique aux moteurs synchrones comme aux moteurs à induction (tels que des moteurs asynchrones). Il permet notamment un alignement du système de commande avec la position initiale du rotor d'un moteur synchrone et ne nécessite pas de conception particulière du moteur, comme par exemple l'existence de saillances (saliency) dans un moteur synchrone.

Pour cela, l'invention décrit un procédé de détermination de la position d'un vecteur de flux rotor d'un moteur électrique doté d'un stator et d'un rotor. Le procédé comporte (i) une étape d'injection d'un premier vecteur courant dans un premier repère d'injection tournant à une première fréquence par rapport à un repère de référence synchrone avec la rotation du moteur, et d'un deuxième vecteur courant dans un deuxième repère d'injection tournant à une deuxième fréquence par rapport au repère de référence, la deuxième fréquence étant l'opposée de la première fréquence, (ii) une étape de détermination d'une première tension induite de flux stator délivrée en sortie d'un premier module intégrateur synchrone avec le premier repère d'injection et d'une deuxième tension induite de flux stator délivrée en sortie d'un deuxième module intégrateur synchrone avec le deuxième repère d'injection, (iii) une étape de régulation de la position du vecteur de flux rotor en minimisant l'erreur entre une position réelle du vecteur de flux rotor et une position estimée du vecteur de flux rotor, l'erreur étant déterminée à partir de la deuxième tension induite de flux stator.

Selon une caractéristique, l'erreur est déterminée à partir de la première tension induite de flux stator et de la deuxième tension induite de flux stator.

Selon une premier mode de réalisation appelé injection rotative, l'amplitude du deuxième vecteur courant est égale à zéro. Selon une second mode de réalisation appelé injection alternative, l'amplitude du deuxième vecteur courant est égale à l'amplitude du premier vecteur courant.

Selon une autre caractéristique, le procédé comporte également une étape d'injection d'un troisième vecteur courant dans un troisième repère d'injection tournant à une troisième fréquence par rapport au repère de référence, et d'un quatrième vecteur courant dans un quatrième repère d'injection tournant à une quatrième fréquence par rapport au repère de référence, la quatrième fréquence étant l'opposée de la troisième fréquence et la troisième fréquence étant le double de la première fréquence.

L'invention concerne également un variateur de vitesse destiné à piloter un moteur électrique de type synchrone ou asynchrone. Le variateur comporte un module onduleur et un module de commande qui est destiné à commander le module onduleur et qui comprend un premier module intégrateur et un deuxième module intégrateur, de façon à mettre en oeuvre un tel procédé de détermination.

D'autres caractéristiques et avantages vont apparaître dans la description détaillée qui suit en se référant à un mode de réalisation donné à titre d'exemple et représenté par les dessins annexés sur lesquels :

- la figure 1 montre un exemple simplifié de la structure d'un variateur de vitesse mettant en oeuvre l'invention,
- la figure 2 détaille le module de commande du variateur de la figure 1,
- la figure 3 donne une représentation graphique du repère de référence et des repères d'injection de courant,
- la figure 4 présente un perfectionnement de la figure 2.

Un variateur de vitesse est habituellement chargé de piloter un moteur électrique M, lequel comporte un stator et un rotor, en délivrant une tension alternative de fréquence variable aux enroulements du stator (PWM - Pulse Width Modulation). L'invention a pour objet de déterminer de façon simple la position du vecteur de flux du rotor, sans utiliser de capteur de vitesse ou de position. La position du vecteur de flux rotor permettra de connaître la position et/ou la vitesse du rotor du moteur, permettant ainsi d'optimiser la commande du moteur. Le procédé de détermination est mis en oeuvre dans le variateur de vitesse. Le moteur électrique peut être un moteur synchrone (par exemple un moteur à aimants permanents - PMSM) ou un moteur asynchrone (moteur à induction) et peut comporter ou ne pas comporter de saillances.

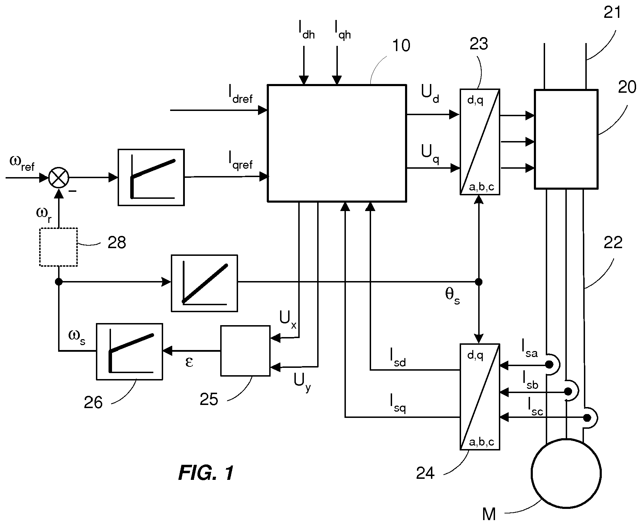

En référence à la figure 1, un variateur de vitesse, destiné à piloter un moteur M, comporte un module onduleur 20 chargé de transformer une tension continue 21 en des tensions triphasées 22 appliquées aux différents enroulements du stator du moteur. De façon classique, le variateur comporte un module de commande 10 qui doit commander les composants semi-conducteurs du module onduleur 20 à partir d'une tension qui est composée de trois composantes $U_a$, $U_b$, $U_c$ dans un repère triphasé fixe a,b,c.

Le module de commande 10 délivre une tension de commande qui est composée de deux composantes $U_d$, $U_q$ dans un repère de référence qui est synchrone avec la vitesse de rotation du moteur. Ce repère de référence est un repère orthogonal qui est habituellement appelé repère d,q - l'axe d représentant l'axe de flux rotor et l'axe q représentant l'axe de couple moteur. Les composantes $U_d$, $U_q$ dans le repère de référence synchrone d,q sont transformées par un bloc convertisseur 23 d,q-->a,b,c pour donner les composantes $U_a$, $U_b$, $U_c$ dans le repère triphasé fixe a,b,c permettant de commander le module onduleur 20.

Le repère de référence d,q fait un angle appelé $\theta_s$ par rapport à un repère fixe, l'angle $\theta_s$ étant déterminé à partir de la vitesse statorique estimée $\omega_s$. L'angle $\theta_s$ correspond à la position estimée du vecteur de flux rotor. Pour optimiser la commande du moteur, on souhaite minimiser l'erreur, appelée $\varepsilon$, de position angulaire du vecteur de flux rotor, de façon à aligner le flux rotor avec l'axe d du repère de référence d,q. Cette erreur $\varepsilon$ correspond à l'écart entre la position réelle $\theta_R$ du vecteur de flux rotor et la position estimée $\theta_S$ du vecteur de flux rotor. On a : $\varepsilon = \theta_R - \theta_S$

En entrée, le module de commande 10 reçoit des courants mesurés $I_{sd}$, $I_{sq}$ dans le repère de référence d,q. Ces courants mesurés $I_{sd}$, $I_{sq}$ proviennent, après transformation par un bloc convertisseur 24 a,b,c-->d,q, des mesures de courants circulant dans les enroulements du stator selon le repère fixe triphasé a,b,c et appelés $I_{sa}$, $I_{sb}$, $I_{sc}$. De façon connue, au moins deux parmi les trois mesures de courants stator $I_{sa}$, $I_{sb}$, $I_{sc}$ sont nécessaires au bloc convertisseur 24 pour obtenir les courants mesurés $I_{sd}$, $I_{sq}$ dans le repère de référence d,q. Pour effectuer les transformations entre le repère fixe a,b,c et le repère d,q, les blocs convertisseurs 23, 24 utilisent l'angle $\theta_s$.

Le module de commande 10 reçoit également en entrée un courant principal de référence $I_{ref}$ comprenant deux composantes $I_{dref}$, $I_{qref}$ dans le repère de référence d,q. Le courant $I_{dref}$ d'axe d correspond au courant principal de flux et le courant $I_{qref}$ d'axe q correspond au courant principal de couple. Le courant principal de référence $I_{ref}$ permet de faire tourner le moteur M avec la vitesse et le couple souhaité. Il est déterminé notamment de façon à minimiser l'écart entre une référence de vitesse moteur $\omega_{ref}$ souhaitée et une vitesse estimée $\omega_r$ de rotation du rotor obtenue à partir de la vitesse statorique $\omega_s$.

Le procédé décrit dans l'invention prévoit d'injecter un courant d'injection $I_h$, ayant des composantes $I_{dh}$ et $I_{qh}$ dans le repère de référence d,q, en superposition des courants principaux $I_{dref}$, $I_{qref}$. Pour cela, le procédé prévoit d'injecter un premier vecteur courant selon un premier repère d'injection $x_+,y_+$, ce premier repère $x_+,y_+$ tournant à une première fréquence d'injection $\Omega$ par rapport au repère de référence d,q synchrone avec la rotation du moteur. Le procédé prévoit également d'injecter un deuxième vecteur courant dans un deuxième repère d'injection $x_-,y_-$ tournant à une deuxième fréquence d'injection $-\Omega$ par rapport au repère de référence d,q.

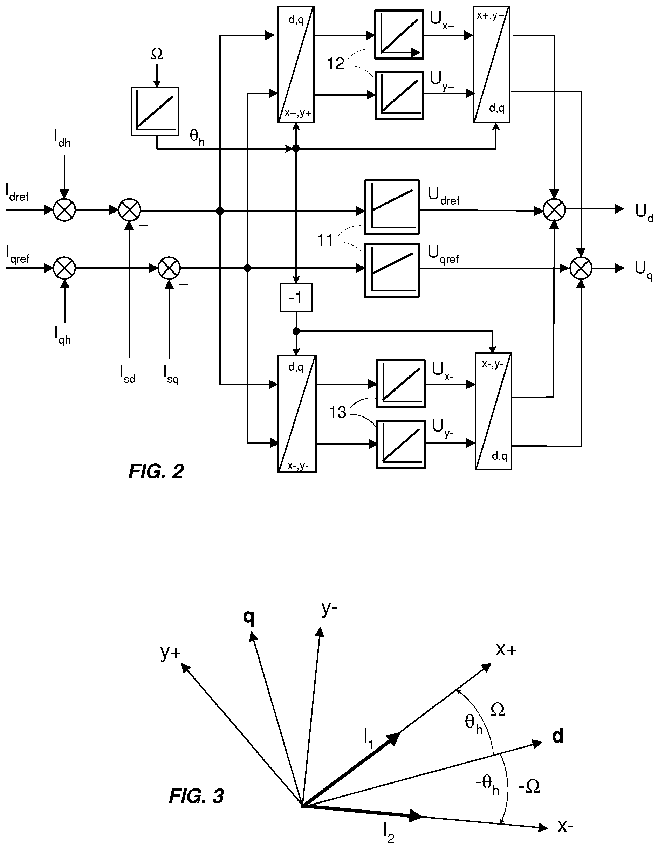

La deuxième fréquence d'injection $-\Omega$ est égale à l'opposée de la première fréquence $\Omega$. Comme indiqué en figure 3, le premier repère d'injection $x_+,y_+$ tournant à la fréquence d'injection $\Omega$ fait donc un angle $\theta_h$ avec le repère de référence d,q et le deuxième repère d'injection $x_-,y_-$, tournant à la fréquence opposée $-\Omega$, fait un angle opposé $-\theta_h$ avec le repère de référence d,q.

Le vecteur courant stator total $I_{tot}$ se décompose en deux composantes $I_{dtot}$, $I_{qtot}$ dans le repère d,q et est donc égal à la somme du courant principal $I_{ref}$ et du courant d'injection $I_h$. On a : $I_{tot} = I_{ref} + I_h$ dans lequel :

$$I_{ref} = I_{dref} + j^*I_{qref} \qquad I_h = I_{dh} + j^*I_{qh} \qquad \text{et} \qquad I_h = I_1{}^*e^{j\Omega t} + I_2{}^*e^{-j\Omega t}$$

La composante du courant d'injection $I_h$ dans le premier repère d'injection $x_+,y_+$ est d'amplitude $I_1$ et la composante du courant d'injection $I_h$ dans le deuxième repère d'injection $x_-,y_-$ est d'amplitude $I_2$. Dans le repère de référence d,q, les composantes $I_{dh}$ et $I_{qh}$ du courant d'injection $I_h$ selon les axes d et q sont égales à :

$$I_{dh} = (I_1+I_2) * \cos(\Omega t) \quad \text{et} \quad I_{qh} = (I_1-I_2) * \sin(\Omega t).$$

En référence à la figure 2, le module de commande 10 du variateur comporte un module régulateur standard PI (proportionnel Intégral) 11 synchrone dans le repère de référence d,q. Le module régulateur PI 11 est en fait composé de deux régulateurs PI qui reçoivent en entrée d'une part l'écart sur la composante d'axe d entre le courant total $I_{dtot}$ et le courant mesuré $I_{sd}$ et d'autre part l'écart sur la composante d'axe q entre $I_{qtot}$ et $I_{sq}$. En sortie, le régulateur PI 11 fournit les tensions principales $U_{dref}$ et $U_{qref}$ dans le repère de référence d,q. On a : $U_{ref} = U_{dref} + j^*U_{qref}$

Selon l'invention, le module de commande 10 comporte également un premier module intégrateur (Intégral) 12 qui est synchrone avec le premier repère $x_+,y_+$, ainsi qu'un deuxième module intégrateur (Intégral) 13 qui est synchrone avec le deuxième repère $x_-,y_-$. Le premier module intégrateur 12 est composé de deux intégrateurs qui reçoivent en entrée d'une part l'écart sur la composante d'axe d entre le courant total $I_{dtot}$ et le courant mesuré $I_{sd}$ et d'autre part l'écart sur la composante d'axe q entre $I_{qtot}$ et $I_{sq}$, après transformation pour passer du repère de référence d,q au premier repère $x_+,y_+$ à l'aide d'un bloc convertisseur d,q --> $x_+,y_+$. De même, le deuxième module intégrateur 13 est composé de deux intégrateurs qui reçoivent en entrée d'une part l'écart sur la composante d'axe d entre le courant total $I_{dtot}$ et le courant mesuré $I_{sd}$ et d'autre part l'écart sur la composante d'axe q entre $I_{qtot}$ et $I_{sq}$, après transformation pour passer du repère de référence d,q au deuxième repère $x_-,y_-$ à l'aide d'un bloc convertisseur d,q --> $x_-,y_-$.

Le premier module intégrateur 12 délivre en sortie une première tension induite de flux stator U+ (appelée aussi plus simplement première tension stator $U_+$) qui se décompose en deux composantes $U_{x+}$ et $U_{y+}$ dans le premier repère $x_+,y_+$. De même, le deuxième module intégrateur 13 délivre en sortie une deuxième tension induite de flux stator

$U_-$ (ou deuxième tension stator $U_-$) qui se décompose en deux composantes $U_{x-}$ et $U_{y-}$ dans le deuxième repère $x_-, y_-$.

On a : $U_+ = U_{x+} + j*U_{y+}$ et $U_- = U_{x-} + j*U_{y-}$

Les sorties des modules intégrateur 12, 13 sont ensuite retransformées par des blocs convertisseurs $x_+, y_+$ --> d,q, respectivement $x_-, y_-$ --> d,q, pour repasser au repère de référence d,q, puis sont additionnées aux tensions principales $U_{dref}$ et $U_{qref}$ pour fournir les deux composantes $U_d$, $U_q$ de la tension de commande à appliquer au moteur M.

Il se trouve que la première tension induite de flux stator $U_+$ et la deuxième tension induite de flux stator $U_-$ sont des fonctions de l'erreur $\varepsilon$ de position angulaire du vecteur de flux rotor, c'est-à-dire de l'écart entre la position réelle $\theta_R$ du vecteur de flux rotor et la position estimée $\theta_S$ du vecteur de flux rotor, qui est égale à la position du repère d,q. Ainsi, la détection de ces tensions $U_+$ et $U_-$ permettra de minimiser l'erreur $\varepsilon$ et donc de déterminer avec précision la position réelle du vecteur de flux rotor.

## 1) Cas d'un moteur M synchrone

Dans un premier mode de réalisation, l'injection de courant est réalisée avec une amplitude $I_1$ de la composante dans le repère $x_+, y_+$ qui est égale à I et une amplitude $I_2$ de la composante dans le repère $x_-, y_-$ qui est égale à zéro. Ce mode est appelé injection rotative de courant harmonique. L'injection de courant ne se fait donc qu'au moyen d'un vecteur de courant tournant à une fréquence d'injection positive $\Omega$. L'injection de courant à une fréquence négative est régulée à zéro.

On a alors : $I_h = I*e^{j\Omega t} = I*\cos(\Omega t) + j*I*\sin(\Omega t) = I_{dh} + j*I_{qh}$.

Dans ce premier mode, la partie réelle $U_{x-}$ (c'est-à-dire la composante d'axe $x_-$) de la deuxième tension induite de flux stator $U_-$ est proportionnelle à l'erreur $\varepsilon$, selon la formule suivante :

$$U_{x-} = \text{Re}(U_-) = \left( \Delta L (\Omega - 2\overline{\omega}) + \frac{3 n_p^2}{4 J \Omega} \overline{\varphi}_m^2 \right) I \sin(2\varepsilon)$$

dans laquelle : $\Delta L$ représente l'inductance de saillance dont la valeur dépend de la différence entre les inductances $L_d$ et $L_q$ d'axe d et q du moteur M, $n_p$ représente le nombre de pôles du moteur, $\varphi_m$ représente l'amplitude du flux magnétique du rotor, $\overline{\omega}$ représente la vitesse moyenne du rotor, J représente l'inertie du moteur.

On remarque que le signal $U_{x-}$ existe même en l'absence de saillance, c'est-à-dire même quand $\Delta L = 0$. Le procédé proposé fonctionne donc même en l'absence de saillance dans le moteur M. Dans le premier mode de réalisation, l'erreur $\varepsilon$ peut être déterminée à partir des deux composantes $U_{x-}$ et $U_{y-}$ de la deuxième tension induite de flux stator $U_-$, selon la formule :

$$\varepsilon = \frac{U_{x-}}{\sqrt{U_{x-}^2 + U_{y-}^2}}$$

Dans un second mode de réalisation, l'injection de courant est réalisée avec l'amplitude $I_1$ de la composante dans le repère $x_+, y_+$ qui est égale à l'amplitude $I_2$ de la composante dans le repère $x_-, y_-$, c'est-à-dire $I_1 = I_2 = I/2$. Ce mode est appelé injection alternative de courant harmonique. Ce cas correspond à l'application de deux composantes du courant injecté $I_{dh}$ et $I_{qh}$, avec l'amplitude $I_{qh}$ égale à 0. On a alors :

$$I_h = I/2*e^{j\Omega t} + I/2*e^{-j\Omega t} = I*\cos(\Omega t) + j*0 = I_{dh} + j*I_{qh}.$$

Ce mode de réalisation est donc équivalent à l'application d'un courant alternatif de fréquence $\Omega$ uniquement sur l'axe d (voir figure 3). La tension induite de flux stator résultante $U_\Sigma$ est égale à :

$$U_\Sigma = (U_- - U_+)/2 = U_{\Sigma x} + j*U_{\Sigma y} = (U_{x-} - U_{x+})/2 + j*(U_{y-} - U_{y+})/2$$

Dans ce second mode, la partie réelle de la deuxième tension induite de flux stator résultante $U_\Sigma$ est proportionnelle à l'erreur $\varepsilon$, selon la formule suivante :

$$U_{\Sigma x} = \mathrm{Re}(U_{\Sigma}) = \left( \Omega \Delta L + \frac{3 n_p^{\ 2}}{4 J \Omega} \left| \overline{\varphi}_m \right|^{\ 2} \right) I \sin(2\varepsilon) + \frac{3 n_p^{\ 2}}{16 J \Omega} \Delta L^2 I^3 \sin(4\varepsilon)$$

Un avantage du second mode de réalisation est que lorsque le flux rotor et le repère de référence du moteur sont alignés, l'injection de courant ne provoque pas d'oscillations de vitesse et de couple (pas de variation de ω). Ce type d'injection est donc très favorable pour une utilisation dans une commande de moteur sans capteur.

Dans le second mode de réalisation, l'erreur ε peut être déterminée à partir des deux composantes $U_{\Sigma x}$ et $U_{\Sigma y}$ de la tension induite de flux stator résultante $U_{\Sigma}$, selon la formule :

$$\varepsilon = \frac{U_{\Sigma x}}{\sqrt{U_{\Sigma x}^{\ 2} + U_{\Sigma y}^{\ 2}}}$$

Ainsi, selon l'invention, l'erreur ε est déterminée de façon simple par un premier bloc de calcul 25, directement à partir des sorties des modules intégrateurs 12 et/ou 13. Dans le premier mode de réalisation, l'erreur ε est déterminée à partir de la deuxième tension stator de flux U₋ délivrée en sortie du deuxième module intégrateur 13 synchrone avec le deuxième repère x₋,y₋. Dans le second mode de réalisation, l'erreur ε est déterminée à partir de la première tension stator de flux U₊ délivrée en sortie du premier module intégrateur 12 synchrone avec le premier repère x₊,y₊ et de la deuxième tension stator de flux U₋ délivrée en sortie du deuxième module intégrateur 13 synchrone avec le deuxième repère x₋,y₋. Par souci de simplification, la figure 1 représente le bloc de calcul 25 avec des entrées notées U₊ et U₋, quel que soit le mode de réalisation.

L'erreur ε calculée par le bloc 25 sert ensuite à déterminer la vitesse statorique $\omega_s$ à l'aide d'un second module de calcul 26 qui comporte par exemple un régulateur PI de type PLL (Phase Locked Loop). Pour un moteur synchrone, il se trouve que la vitesse du moteur correspond à la vitesse du repère d,q.

$$\omega_s(s) = -\left( K_{p\varepsilon} + \frac{K_{i\varepsilon}}{s} \right) \varepsilon(s)$$

D'autres méthodes de calcul connues sont également envisageables pour obtenir la vitesse statorique $\omega_s$ à partir de l'erreur ε, en utilisant par exemple des techniques d'observateur.

Dans le cas d'un moteur synchrone, la vitesse statorique $\omega_s$ donne directement la vitesse estimée $\omega_r$ de rotation du rotor. Dans le cas du moteur asynchrone, un bloc de calcul complémentaire 28 (voir figure 1) permet de tenir compte du glissement du moteur pour déterminer la vitesse estimée $\omega_r$ du rotor à partir de la vitesse statorique $\omega_s$. Dans les deux cas, cette vitesse estimée $\omega_r$ du rotor est ensuite soustraite à la référence de vitesse $\omega_{ref}$ pour calculer le courant principal de couple $I_{qref}$.

Par ailleurs, en intégrant la vitesse statorique $\omega_s$, on obtient l'angle $\theta_s$ représentant la position du repère de référence d,q. L'angle $\theta_s$ est donc déterminé à partir des sorties des modules intégrateurs 12 et/ou 13. Avantageusement, la valeur calculée de l'angle $\theta_s$ du repère d,q est rebouclée et est utilisée dans les blocs convertisseurs 23 et 24 pour ajuster et réguler au mieux l'angle entre le repère de référence d,q et le repère fixe.

Ainsi, grâce à cette boucle de régulation, on optimise en permanence et de façon simple l'angle de rotation du repère de référence d,q par rapport au repère fixe triphasé a,b,c, ce qui permet notamment d'affiner les courants mesurés $I_{sd}$, $I_{sq}$. Cette étape de régulation permet donc de minimiser et de faire tendre vers zéro l'erreur ε de position angulaire du vecteur de flux rotor, c'est-à-dire d'obtenir une position estimée $\theta_S$ du vecteur de flux rotor qui est égale à la position réelle $\theta_R$ du vecteur de flux rotor.

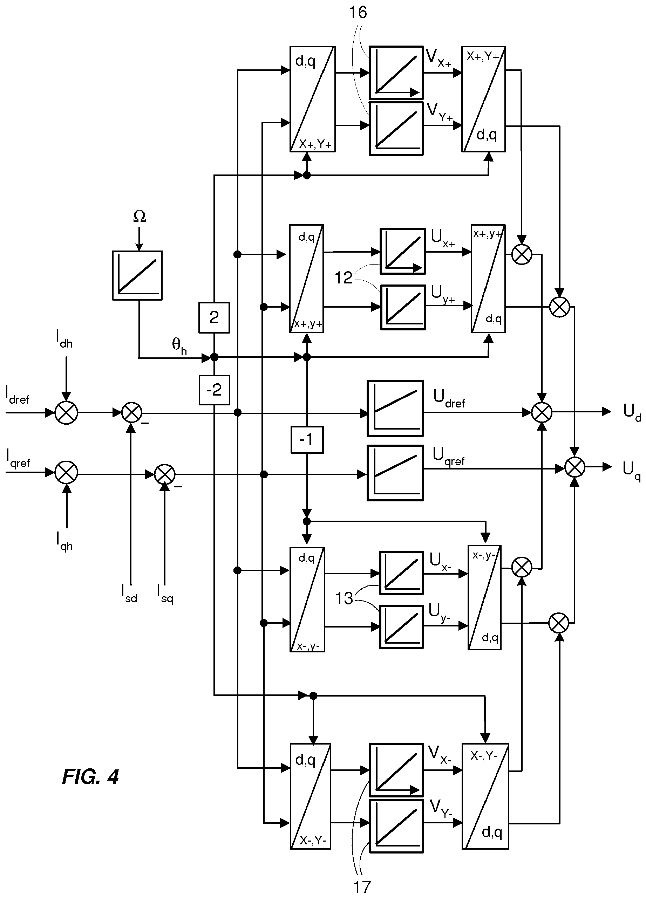

Dans les équations présentées ci-dessus, on constate que les tensions induites de flux stator sont des fonctions de 2ε. Cela signifie que pour un moteur PMSM comportant un rotor aimanté, il est seulement possible de détecter la position du flux magnétique du rotor, mais pas son orientation ou sa polarité (ambiguïté 0-π). Cependant, si le moteur M présente des saillances, il est toujours possible de détecter l'orientation du flux magnétique en utilisant le perfectionnement de la méthode de détermination illustré en figure 4.

En référence à la figure 4, l'injection de courant est réalisée non seulement avec une première et deuxième fréquence d'injection égales à respectivement Ω et -Ω, mais également avec une troisième et une quatrième fréquence d'injection égales respectivement au double de la première fréquence Ω et de la deuxième fréquence -Ω.

Le procédé prévoit donc également d'injecter un troisième vecteur courant selon un troisième repère d'injection de courant X₊,Y₊, ce troisième repère X₊,Y₊ tournant à la fréquence d'injection 2Ω par rapport au repère de référence d,q et un quatrième vecteur courant dans un quatrième repère d'injection de courant X-,Y- tournant à la fréquence d'injection -2Ω par rapport au repère de référence d,q. Le troisième vecteur courant est d'amplitude $I_1$ et le quatrième vecteur courant est d'amplitude $I_2$. Le module de commande 10 comporte également un troisième module intégrateur (Intégral) 16 qui est synchrone avec le troisième repère $X_+,Y_+$, ainsi qu'un quatrième module intégrateur (Intégral) 17 qui est synchrone avec le quatrième repère $X_-,Y_-$, chaque module intégrateur 16,17 étant composé de deux intégrateurs, comme indiqué en figure 4.

Le troisième module intégrateur 16 délivre en sortie une troisième tension induite de flux stator $V_+$ qui se décompose en deux composantes $V_{X+}$ et $V_{Y+}$ dans le troisième repère $X_+,Y_+$. De même, le quatrième module intégrateur 16 délivre en sortie une quatrième tension induite de flux stator $V_-$ qui se décompose en deux composantes $V_{X-}$ et $V_{Y-}$ dans le quatrième repère $X_-,Y_-$.

On a : $V_+ = V_{X+} + j*V_{Y+}$ et $V_- = V_{X-} + j*V_{Y-}$.

Les sorties des modules intégrateur 16, 17 sont ensuite retransformées pour repasser au repère de référence d,q, puis sont additionnées aux tensions principales $U_{dref}$ et $U_{qref}$ pour fournir les deux composantes $U_d$, $U_q$ de la tension de commande à appliquer au moteur M. Il se trouve que la partie réelle de la tension induite $V_+$ est directement fonction de l'erreur ε, suivant la formule :

$$V_{X^+} = -\left(\frac{3\,n_p^{\,2}}{2J\Omega}\overline{\varphi}_m\,\frac{\Delta L I^2}{4}\right)\sin(\varepsilon)$$

Donc, en analysant le signe de la composante $V_{X+}$ de la troisième tension induite de flux stator $V_+$, il est possible de facilement déterminer le signe de sin(ε) et donc l'orientation du flux magnétique du rotor.

## 2) Cas d'un moteur M à induction

Avantageusement, le procédé de détermination décrit dans l'invention est également réalisable avec un moteur à induction, par exemple un moteur asynchrone. En effet, dans le cas d'un moteur à induction, la première tension induite de flux stator $U_+$ et la deuxième tension induite de flux stator $U_-$ sont également fonction de l'erreur ε de position angulaire du vecteur de flux rotor. Les deux modes de réalisation décrits précédemment sont donc utilisables avec un moteur à induction.

Dans un premier mode de réalisation similaire à celui précédemment décrit, l'injection de courant est réalisée avec une amplitude $I_1$ de la composante dans le repère $x_+,y_+$ qui est égale à I et une amplitude $I_2$ de la composante dans le repère $x_-,y_-$ qui est égale à zéro. L'injection de courant ne se fait donc qu'au moyen d'un vecteur de courant tournant à une fréquence d'injection positive Ω. L'injection de courant à une fréquence négative est régulée à zéro. On a alors : $I_h = I*e^{j\Omega t} = I*\cos(\Omega t) + j*I*\sin(\Omega t)$

Dans ce premier mode, la partie réelle $U_{x-}$ de la deuxième tension induite de flux stator $U_-$ est proportionnelle à l'erreur ε, selon la formule suivante :

$$U_{x-} = \mathrm{Re}(U_-) = \frac{3\,n_p^{\,2}\,I}{4J\Omega}|\overline{\varphi}_r|^2\left[\left(1-\frac{\overline{\omega}}{\Omega}\right)\sin(2\varepsilon)-\frac{\tau_r^{\,-1}}{\Omega}\cos(2\varepsilon)\right]$$

dans laquelle $n_p$ représente le nombre de pôles du moteur, $\varphi_r$ représente l'amplitude du flux magnétique du rotor, $\overline{\omega}$ représente la vitesse moyenne du rotor, J représente l'inertie du moteur, $\tau_r$ représente une constante de temps du rotor.

Dans un second mode de réalisation similaire à celui précédemment décrit, l'injection de courant est réalisée avec l'amplitude $I_1$ de la composante dans le repère $x_+,y_+$ qui est égale à l'amplitude $I_2$ de la composante dans le repère $x_-,y_-$, c'est-à-dire $I_1 = I_2 = I/2$. Ce cas correspond à l'application de deux composantes du courant injecté $I_{dh}$ et $I_{qh}$, avec l'amplitude $I_{qh}$ égale à 0. On a alors : $I_h = I/2*e^{j\Omega t} + I/2*e^{-j\Omega t} = I*\cos(\Omega t)$

Dans ce second mode, la partie réelle de la deuxième tension induite de flux stator résultante $U_\Sigma$ est proportionnelle à l'erreur ε selon la formule suivante :

$$U_{\Sigma x} = \mathrm{Re}(U_\Sigma) = -\frac{3\,n_p^{\,2}\,I}{4J\,\Omega}|\overline{\varphi}_r|^2\,\sin(2\varepsilon)+\frac{\overline{\omega}}{\Omega}R_r\,I$$

dans laquelle $n_p$ représente le nombre de pôles du moteur, $\varphi_r$ représente l'amplitude du flux magnétique du rotor, Rr représente la résistance équivalente de la résistance du rotor, $\overline{\omega}$ représente la vitesse moyenne du rotor, J représente l'inertie du moteur.

On constate que l'équation ci-dessus comporte un terme d'offset $\dfrac{\overline{\omega}}{\Omega} R_r I$ qui est une valeur fixe ne dépendant pas de $\varepsilon$. L'effet de cet offset est cependant atténué et peut être négligé si la fréquence d'injection $\Omega$ est sélectionnée à une valeur suffisamment haute (par exemple 30Hz) par rapport à la vitesse moyenne $\overline{\omega}$ du rotor. Cette condition est remplie puisque l'invention est particulièrement adaptée pour une détermination de la position du rotor tournant à une vitesse réduite (par exemple < 5 Hz).

## Revendications

1. Procédé de détermination de la position d'un vecteur de flux rotor d'un moteur électrique (M) comportant un stator et un rotor, **caractérisé en ce que** le procédé comporte :

   - une étape d'injection d'un premier vecteur courant dans un premier repère d'injection $(x_+,y_+)$ tournant à une première fréquence ($\Omega$) par rapport à un repère de référence (d,q) synchrone avec la rotation du moteur, et d'un deuxième vecteur courant dans un deuxième repère d'injection $(x_-,y_-)$ tournant à une deuxième fréquence par rapport au repère de référence (d,q), la deuxième fréquence étant l'opposée de la première fréquence,
   - une étape de détermination d'une première tension induite de flux stator délivrée en sortie d'un premier module intégrateur (12) synchrone avec le premier repère d'injection $(x_+,y_+)$ et d'une deuxième tension induite de flux stator délivrée en sortie d'un deuxième module intégrateur (13) synchrone avec le deuxième repère d'injection $(x_-,y_-)$,
   - une étape de régulation de la position du vecteur de flux rotor en minimisant l'erreur ($\varepsilon$) entre une position réelle ($\theta_R$) du vecteur de flux rotor et une position estimée ($\theta_S$) du vecteur de flux rotor, l'erreur ($\varepsilon$) étant déterminée à partir de la deuxième tension induite de flux stator.

2. Procédé de détermination selon la revendication 1, **caractérisé en ce que** l'erreur ($\varepsilon$) est déterminée à partir de la première tension induite de flux stator et de la deuxième tension induite de flux stator.

3. Procédé de détermination selon la revendication 2, **caractérisé en ce que** l'amplitude ($I_2$) du deuxième vecteur courant est égale à l'amplitude ($I_1$) du premier vecteur courant.

4. Procédé de détermination selon la revendication 1, **caractérisé en ce que** l'amplitude ($I_2$) du deuxième vecteur courant est égale à zéro.

5. Procédé de détermination selon l'une des revendications 1 à 4, **caractérisé en ce que** le moteur électrique (M) est un moteur à induction.

6. Procédé de détermination selon l'une des revendications 1 à 4, **caractérisé en ce que** le moteur électrique (M) est un moteur synchrone.

7. Procédé de détermination selon la revendication 6, **caractérisé en ce que** le procédé comporte une étape d'injection d'un troisième vecteur courant dans un troisième repère d'injection $(X_+,Y_+)$ tournant à une troisième fréquence par rapport au repère de référence (d,q), et d'un quatrième vecteur courant dans un quatrième repère d'injection $(X_-,Y_-)$ tournant à une quatrième fréquence par rapport au repère de référence (d,q), la quatrième fréquence étant l'opposée de la troisième fréquence et la troisième fréquence étant le double de la première fréquence.

8. Variateur de vitesse destiné à piloter un moteur électrique (M) comportant un stator et un rotor, le variateur comportant un module onduleur (20) et un module de commande (10) destiné à commander le module onduleur (20), le module de commande (10) comportant un premier module intégrateur (12) et un deuxième module intégrateur (13), **caractérisé en ce que** le variateur de vitesse met en oeuvre un procédé comportant :

   - une étape d'injection d'un premier vecteur courant dans un premier repère d'injection $(x_+,y_+)$ tournant à une première fréquence ($\Omega$) par rapport à un repère de référence (d,q) synchrone avec la rotation du moteur (M), et d'un deuxième vecteur courant dans un deuxième repère d'injection $(x_-,y_-)$ tournant à une deuxième fréquence par rapport au repère de référence (d,q), la deuxième fréquence étant l'opposée de la première fréquence,
- une étape de détermination d'une première tension induite de flux stator délivrée en sortie du premier module intégrateur (12) synchrone avec le premier repère d'injection $(x_+, y_+)$ et d'une deuxième tension induite de flux stator délivrée en sortie du deuxième module intégrateur (13) synchrone avec le deuxième repère d'injection $(x_-, y_-)$,
- une étape de régulation de la position du vecteur de flux rotor en minimisant l'erreur $(\varepsilon)$ entre une position réelle $(\theta_R)$ du vecteur de flux rotor et une position estimée $(\theta_S)$ du vecteur de flux rotor, l'erreur $(\varepsilon)$ étant déterminée à partir de la deuxième tension induite de flux stator.

**Patentansprüche**

1. Verfahren zur Positionsbestimmung eines Rotorflussvektors eines Elektromotors (M) mit einem Stator und einem Rotor, **dadurch gekennzeichnet, dass** das Verfahren umfasst:

   - einen Schritt des Injizierens eines ersten Stromvektors in eine erste Injektionsmarkierung $(x_+, y_+)$, die sich mit einer ersten Frequenz $(\Omega)$ relativ zu einer Referenzmarkierung (d, q) synchron mit der Motordrehung dreht, und eines zweiten Stromvektors in eine zweite Injektionsmarkierung $(x_-, y_-)$, die sich mit einer zweiten Frequenz relativ zu der Referenzmarkierung (d, q) dreht, wobei die zweite Frequenz entgegengesetzt zur ersten Frequenz ist,
   - einen Schritt des Bestimmens einer ersten durch den Statorfluss induzierten Spannung, die am Ausgang eines ersten Integratormoduls (12) synchron mit der ersten Injektionsmarkierung $(x_+, y_+)$ ausgegeben wird, und einer zweiten durch den Statorfluss induzierten Spannung, die am Ausgang eines zweiten Integratormoduls (13) synchron mit der zweiten Injektionsmarkierung $(x_-, y_-)$ ausgegeben wird,
   - einen Schritt des Regulierens der Position des Rotorflussvektors durch Minimieren der Abweichung $(\varepsilon)$ zwischen einer tatsächlichen Position $(\theta_R)$ des Rotorflussvektors und einer geschätzten Position $(\theta_S)$ des Rotorflussvektors, wobei die Abweichung $(\varepsilon)$ ausgehend von der zweiten durch den Statorfluss induzierten Spannung bestimmt wird.

2. Verfahren zur Bestimmung nach Anspruch 1, **dadurch gekennzeichnet, dass** die Abweichung $(\varepsilon)$ ausgehend von der ersten durch den Statorfluss induzierten Spannung und der zweiten durch den Statorfluss induzierten Spannung bestimmt wird.

3. Verfahren zur Bestimmung nach Anspruch 2, **dadurch gekennzeichnet, dass** die Amplitude $(I_2)$ des zweiten Stromvektors gleich der Amplitude $(I_1)$ des ersten Stromvektors ist.

4. Verfahren zur Bestimmung nach Anspruch 1, **dadurch gekennzeichnet, dass** die Amplitude $(I_2)$ des zweiten Stromvektors Null beträgt.

5. Verfahren zur Bestimmung nach einem der Ansprüche 1 bis 4, **dadurch gekennzeichnet, dass** es sich bei dem Elektromotor (M) um einen Induktionsmotor handelt.

6. Verfahren zur Bestimmung nach einem der Ansprüche 1 bis 4, **dadurch gekennzeichnet, dass** es sich bei dem Elektromotor (M) um einen Synchronmotor handelt.

7. Verfahren zur Bestimmung nach Anspruch 6, **dadurch gekennzeichnet, dass** das Verfahren einen Schritt des Injizierens eines dritten Stromvektors in eine dritte Injektionsmarkierung $(X_+, Y_+)$, die sich mit einer dritten Frequenz relativ zu der Referenzmarkierung (d, q) dreht, und eines vierten Stromvektors in eine vierte Injektionsmarkierung $(X_-, Y_-)$, die sich mit einer vierten Frequenz relativ zu der Referenzmarkierung (d, q) dreht, umfasst, wobei die vierte Frequenz entgegengesetzt zur dritten Frequenz ist und die dritte Frequenz das Doppelte der ersten Frequenz beträgt.

8. Drehzahlregler, der dazu bestimmt ist, einen Elektromotor (M) mit einem Stator und einem Rotor zu steuern, wobei der Regler ein Wechselrichtermodul (20) und ein Steuermodul (10) zum Steuern des Wechselrichtermoduls (20) umfasst, wobei das Steuermodul (10) ein erstes Integratormodul (12) und ein zweites Integratormodul (13) umfasst, **dadurch gekennzeichnet, dass** der Drehzahlregler ein Verfahren ausführt, das umfasst:

   - einen Schritt des Injizierens eines ersten Stromvektors in eine erste Injektionsmarkierung $(x_+, y_+)$, die sich mit einer ersten Frequenz $(\Omega)$ relativ zu einer Referenzmarkierung (d, q) synchron mit der Drehung des Motors (M) dreht, und eines zweiten Stromvektors in eine zweite Injektionsmarkierung $(x_-, y_-)$, die sich mit einer zweiten Frequenz relativ zu der Referenzmarkierung (d, q) dreht, wobei die zweite Frequenz entgegengesetzt zur ersten Frequenz ist,

- einen Schritt des Bestimmens einer ersten durch den Statorfluss induzierten Spannung, die am Ausgang des ersten Integratormoduls (12) synchron mit der ersten Injektionsmarkierung $(x_+, y_+)$ ausgegeben wird, und einer zweiten durch den Statorfluss induzierten Spannung, die am Ausgang des zweiten Integratormoduls (13) synchron mit der zweiten Injektionsmarkierung $(x_-, y_-)$ ausgegeben wird,

- einen Schritt des Regulierens der Position des Rotorflussvektors durch Minimieren der Abweichung $(\varepsilon)$ zwischen einer tatsächlichen Position $(\theta_R)$ des Rotorflussvektors und einer geschätzten Position $(\theta_S)$ des Rotorflussvektors, wobei die Abweichung $(\varepsilon)$ ausgehend von der zweiten durch den Statorfluss induzierten Spannung bestimmt wird.

## Claims

1. Method for determining the position of a rotor flux vector of an electric motor (M) comprising a stator and a rotor, **characterized in that** the method comprises:

   - a step of injecting a first current vector into a first injection reference frame $(x_+, y_+)$ rotating at a first frequency $(\Omega)$ relative to a reference frame (d, q) synchronous with the rotation of the motor, and a second current vector into a second injection reference frame $(x_-, y_-)$ rotating at a second frequency relative to the reference frame (d, q), the second frequency being the opposite of the first frequency,
   - a step of determining a first stator flux induced voltage delivered at the output of a first integrator module (12) synchronous with the first injection reference frame $(x_+, y_+)$ and a second stator flux induced voltage delivered at the output of a second integrator module (13) synchronous with the second injection reference frame $(x_-, y_-)$,
   - a step of regulating the position of the rotor flux vector by minimizing the error $(\varepsilon)$ between a real position $(\theta_R)$ of the rotor flux vector and an estimated position $(\theta_S)$ of the rotor flux vector, the error $(\varepsilon)$ being determined based on the second stator flux induced voltage.

2. Determination method according to Claim 1, **characterized in that** the error $(\varepsilon)$ is determined based on the first stator flux induced voltage and on the second stator flux induced voltage.

3. Determination method according to Claim 2, **characterized in that** the amplitude $(I_2)$ of the second current vector is equal to the amplitude $(I_1)$ of the first current vector.

4. Determination method according to Claim 1, **characterized in that** the amplitude $(I_2)$ of the second current vector is equal to zero.

5. Determination method according to one of Claims 1 to 4, **characterized in that** the electric motor (M) is an induction motor.

6. Determination method according to one of Claims 1 to 4, **characterized in that** the electric motor (M) is a synchronous motor.

7. Determination method according to Claim 6, **characterized in that** the method comprises a step of injecting a third current vector into a third injection reference frame $(X_+, Y_+)$ rotating at a third frequency relative to the reference frame (d, q) and a fourth current vector into a fourth injection reference frame $(X_-, Y_-)$ rotating at a fourth frequency relative to the reference frame (d, q), the fourth frequency being the opposite of the third frequency and the third frequency being the double of the first frequency.

8. Variable speed drive designed to drive an electric motor (M) comprising a stator and a rotor, the variable drive comprising an inverter module (20) and a control module (10) designed to control the inverter module (20), the control module comprising a first integrator module (12) and a second integrator module (13), **characterized in that** the variable speed drive uses a method comprising:

   - a step of injecting a first current vector into a first injection reference frame $(x_+, y_+)$ rotating at a first frequency $(\Omega)$ relative to a reference frame (d, q) synchronous with the rotation of the motor (M), and a second current vector into a second injection reference frame $(x_-, y_-)$ rotating at a second frequency relative to the reference frame (d, q), the second frequency being the opposite of the first frequency,
- a step of determining a first stator flux induced voltage delivered at the output of a first integrator module (12) synchronous with the first injection reference frame ($x_+$, $y_+$) and a second stator flux induced voltage delivered at the output of a second integrator module (13) synchronous with the second injection reference frame ($x_-$, $y_-$),
- a step of regulating the position of the rotor flux vector by minimizing the error ($\varepsilon$) between a real position ($\theta_R$) of the rotor flux vector and an estimated position ($\theta_S$) of the rotor flux vector, the error ($\varepsilon$) being determined based on the second stator flux induced voltage.

*FIG. 1*

FIG. 2

FIG. 3

FIG. 4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1944860 A

**Littérature non-brevet citée dans la description**

- **V.-M. LEPPANEN ; J. LUOMI.** Speed-Sensorless Induction Machine Control for Zero Speed and Frequency. *IEEE Transactions on Industrial Electronics,* Octobre 2004, vol. 51 (5), 1041-1047

- **S. WU ; Y. LI ; X. MIAO.** Comparison of Signal Injection Methods for Sensorless control of PMSM at Very Low Speeds. *IEEE Power Electronics Specialists Conference, PESC,* 20 Juin 2007, vol. 07, 568-573